(19) **Europäisches Patentamt European Patent Office Office européen des brevets**

(11) **EP 4 375 543 A1**

(12) **EUROPEAN PATENT APPLICATION**
published in accordance with Art. 153(4) EPC

(43) Date of publication:
**29.05.2024  Bulletin 2024/22**

(21) Application number: **22845262.9**

(22) Date of filing: **18.07.2022**

(51) International Patent Classification (IPC):
**F16H 59/72** (2006.01)     **F16H 57/04** (2010.01)

(86) International application number:
**PCT/CN2022/106223**

(87) International publication number:
**WO 2023/001097 (26.01.2023 Gazette 2023/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **22.07.2021   CN 202110829603**

(71) Applicant: **China Faw Co., Ltd.**
**Changchun, Jilin 130011 (CN)**

(72) Inventors:
• **ZHANG, Xuefeng**
  **Changchun, Jilin 130011 (CN)**
• **CHEN, Guodong**
  **Changchun, Jilin 130011 (CN)**

• **YANG, Yunbo**
  **Changchun, Jilin 130011 (CN)**
• **LI, Yan**
  **Changchun, Jilin 130011 (CN)**
• **WU, Gang**
  **Changchun, Jilin 130011 (CN)**
• **LIU, Zhiwen**
  **Changchun, Jilin 130011 (CN)**
• **ZHU, Guiqing**
  **Changchun, Jilin 130011 (CN)**
• **WANG, Qian**
  **Changchun, Jilin 130011 (CN)**

(74) Representative: **Penza, Giancarlo**
  **Bugnion S.p.A.**
  **Viale Lancetti, 17**
  **20158 Milano (IT)**

(54) **COOLANT CIRCULATION SYSTEM FOR TRANSMISSION OIL, CONTROL METHOD, VEHICLE, AND STORAGE MEDIUM**

(57)     A control method for a circulation system of a coolant for transmission oil, comprising: acquiring a transmission actual oil temperature, a clutch temperature and an ambient temperature; calculating a transmission equivalent oil temperature; determining whether the transmission equivalent oil temperature is greater than a preset oil temperature; respectively determining, on the basis of a determination result that the transmission equivalent oil temperature is greater than the preset oil temperature, a target temperature of an engine coolant and a target flow rate of a coolant flowing through the transmission oil cooler according to the transmission equivalent oil temperature; and controlling the engine coolant to change from a current temperature to the target temperature, and at the same time controlling the flow rate of the coolant flowing through the transmission oil cooler to change from a current flow rate to the target flow rate. The present disclosure also relates to a circulation system of a coolant for transmission oil, a vehicle and a storage medium.

Acquire a transmission actual oil temperature, a clutch temperature and an ambient temperature

Calculate a transmission equivalent oil temperature according to the acquired transmission actual oil temperature, clutch temperature and ambient temperature — S2

The transmission equivalent oil temperature is greater than a preset oil temperature — S3

是

Respectively determine a target temperature of an engine coolant and a target flow rate of a coolant flowing through the transmission oil cooler according to the transmission equivalent oil temperature — S4

Control the engine coolant to change from a current temperature to the target temperature, and at the same time control the flow rate of the coolant flowing through the transmission oil cooler to change from a current flow rate to the target flow rate — S5

Fig. 2

EP 4 375 543 A1

## Description

The present disclosure claims priority to Chinese patent application no. 202110829603.2, filed with the Chinese Patent Office on July 22, 2021, which is incorporated herein by reference in its entirety.

## Technical Field

The present disclosure relates to the technical field of automatic transmission cooling control, and for example, to a circulation system of a coolant for transmission oil, a control method, a vehicle and a storage medium.

## Background

Automatic transmission has advantages such as simple operation and good ride comfort. In high temperature environments and/or when the vehicle is traveling at high speeds, the oil temperature of an oil cooler of the transmission increases faster. In order to improve the transfer efficiency of the automatic transmission, the oil temperature of the oil cooler needs to be controlled.

Methods for controlling the oil temperature of an oil cooler in the related art mainly use the temperature of transmission oil as an input signal; when the temperature of the transmission oil is not too high, except that a part of cooling water of an engine is circulated back to the engine through a heating system of an automobile, another part of the cooling water enters the oil cooler to cool the transmission oil; and when the temperature of the transmission oil is relatively high, the cooling water of the engine flows to a cooling fan, a part of the water cooled by the cooling fan is directly circulated back to the engine, and another part flows into the oil cooler to cool the transmission oil. The temperature of the transmission oil is used as a unique control input signal, and the rotation speed of the engine or the rotation speed of the heat dissipation fan is adjusted to control the oil temperature of the oil cooler. Such control methods have relatively low precision of adjusting the oil temperature of the oil cooler, for example, when in high temperature environments and/or when the vehicle is traveling at high speeds, overheating of the transmission easily occurs, thereby affecting the transfer efficiency thereof.

## Summary

The present disclosure provides a circulation system of a coolant for transmission oil, a control method, a vehicle and a storage medium, which can precisely adjust the temperature of transmission oil, thereby achieving precise control of the transmission cooling.

The present disclosure provides the following technical solutions:

according to a first aspect, provided is a control method for a circulation system of a coolant for transmission oil, the circulation system of a coolant for transmission oil comprising an engine cooling circuit, a transmission oil cooler and a heat dissipation assembly, the transmission oil cooler and the heat dissipation assembly being able to be respectively coupled to the engine cooling circuit, wherein the method comprises:

acquiring a transmission actual oil temperature, a clutch temperature and an ambient temperature;

calculating a transmission equivalent oil temperature according to the acquired transmission actual oil temperature, clutch temperature and ambient temperature;

determining whether the transmission equivalent oil temperature is greater than a preset oil temperature;

respectively determining, on the basis of a determination result that the transmission equivalent oil temperature is greater than the preset oil temperature, a target temperature of an engine coolant and a target flow rate of a coolant flowing through the transmission oil cooler according to the transmission equivalent oil temperature; and

controlling the engine coolant to change from a current temperature to the target temperature, and at the same time controlling the flow rate of the coolant flowing through the transmission oil cooler to change from a current flow rate to the target flow rate.

According to a second aspect, provided is a circulation system of a coolant for transmission oil, comprising an engine cooling circuit, a transmission oil cooler and a heat dissipation assembly, the transmission oil cooler and the heat dissipation assembly being able to be respectively coupled to the engine cooling circuit, wherein the system further comprises:

an acquisition module configured to acquire a transmission actual oil temperature, a clutch temperature and an ambient temperature;

a first calculation module configured to calculate a transmission equivalent oil temperature according to the transmission actual oil temperature, the clutch temperature and the ambient temperature;

a determination module configured to determine whether the transmission equivalent oil temperature is greater than a preset oil temperature;

a second calculation module configured to determine, on the basis of a determination result that the transmission equivalent oil temperature is greater than the preset oil temperature, a target temperature of an engine coolant and a target flow rate of a coolant flowing through the transmission oil cooler according to the transmission equivalent oil temperature;

a temperature control module configured to control the engine coolant to change from a current temperature to the target temperature; and

a flow rate control module configured to control the flow rate of the coolant flowing through the transmission oil cooler to change from a current flow rate to the target flow rate while the temperature control module controls the engine coolant to change from the current temperature to the target temperature.

According to a third aspect, provided is a vehicle, wherein the vehicle comprises:

at least one processor; and

a storage device configured to store at least one program;

wherein when the at least one program is executed by the at least one processor, the at least one processor is caused to implement the control method for a circulation system of a coolant for transmission oil.

According to a fourth aspect, provided is a computer readable storage medium, storing a computer program which, when executed by a processor, implements the control method for a circulation system of a coolant for transmission oil.

## Brief Description of the Drawings

Fig. 1 is a schematic diagram of a circulation system of a coolant for transmission oil according to an embodiment of the present disclosure;

Fig. 2 is a flowchart of a control method for a circulation system of a coolant for transmission oil according to an embodiment of the present disclosure; and

Fig. 3 is a schematic diagram of a vehicle according to an embodiment of the present disclosure.

## Detailed Description of the Embodiments

The technical solutions of the embodiments of the present disclosure will be further described in detail below with reference to the drawings. In the description of the present disclosure, it should be noted that, orientation or position relationships indicated by terms such as "center", "up", "down", "left", "right", "vertical", "horizontal", "inner" and "outer" are orientation or position relationships based on those illustrated in the drawings, which are only used to facilitate description of the present disclosure and simplify the description, and do not indicate or imply that the device or element referred to must have a specific orientation, or be configured or operated in a specific orientation, and therefore cannot be construed as limitations to the present disclosure. In addition, the terms "first" and "second" are only used for descriptive purposes, and cannot be understood as indicating or implying relative importance. The terms "first position" and "second position" mean two different positions.

In the description of the present disclosure, it should be noted that, unless specified or defined otherwise, the terms "mount", "link" and "connect" should be understood in a broad sense, for example, may be fixed connections or detachable connections, may be mechanical connections or electrical connections, may be direct connections or indirect connections via intermediaries, and may be communications between the interior of two elements. The specific meanings of the above terms in the present disclosure can be understood by those skilled in the art according to specific situations.

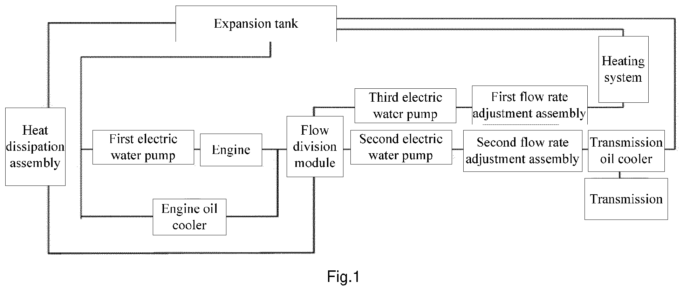

Disclosed in the present embodiment is a control method for a circulation system of a coolant for transmission oil. The control method is performed on the basis of the circulation system of a coolant for transmission oil shown in Fig. 1. Referring to Fig. 1, the circulation system of a coolant for transmission oil comprises an engine cooling circuit, a transmission oil cooler and a heat dissipation assembly. The transmission oil cooler and the heat dissipation assembly can be respectively coupled to the engine cooling circuit. For example, the circulation system of a coolant for transmission oil further comprises a heating assembly. The heating assembly can also be coupled to the engine cooling circuit.

For example, the engine cooling circuit comprises a first electric water pump and an engine which are connected in series, and an engine oil cooler. The engine cooling circuit is respectively connected to the heating assembly, the transmission oil cooler and the heat dissipation assembly by means of a flow direction control assembly. Exemplarily, the flow direction control assembly is a reversing valve, and can respectively control connection and disconnection between the engine cooling circuit and the heating assembly, the transmission oil cooler and the heat dissipation assembly. The transmission oil cooler, the heating assembly and the heat dissipation assembly can be respectively connected in parallel with the engine oil cooler.

The first electric water pump drives a coolant to flow in the engine cooling circuit, such that the coolant exchanges heat with the engine oil cooler to cool the engine. When passing through the engine oil cooler, the coolant is heated and the temperature increases, and after passing through the flow direction control assembly, the coolant of which the temperature increases can flow to the heating assembly, the transmission oil cooler and the heat dissipation assembly respectively. The heating assembly comprises a heat exchanger. The coolant flowing to the heating assembly exchanges heat with the heat exchanger, so as to heat the passenger compartment. The coolant flowing to the transmission oil cooler exchanges heat with the transmission oil, so as to cool the transmission. The coolant flowing to the heat dissipation assembly exchanges heat with the ambient environment, and is cooled. The heat dissipation assembly comprises a cooling fan. The cooling fan is configured to accelerate the heat exchange between the coolant and the ambient environment. The coolant flowing through the transmission oil cooler, the heating assembly and the heat dissipation assembly is circulated back to the engine cooling circuit after passing through an expansion tank.

A second electric water pump and a first flow rate adjustment member are connected between the transmission oil cooler and the engine. The second electric water pump is configured to drive the coolant passing through the flow direction control assembly to flow to the transmission oil cooler. The first flow rate adjustment member is configured to adjust the flow rate of the coolant flowing to the transmission oil cooler. A third electric water pump and a second flow rate adjustment member are connected between the heating assembly and the engine. The third electric water pump is configured to drive the coolant passing through the flow direction control assembly to flow to the heating assembly. The second flow rate adjustment member is configured to adjust the flow rate of the coolant flowing to the heating assembly. Exemplarily, both the first flow rate adjustment member and the second flow rate adjustment member are throttling valves.

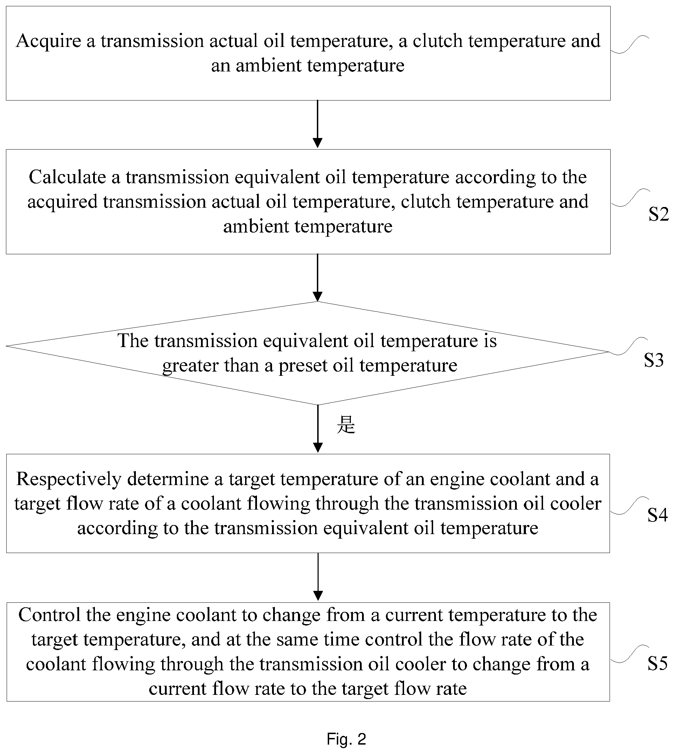

Fig. 2 is a flowchart of a control method for a circulation system of a coolant for transmission oil in the present embodiment. The control method comprises:

S1: acquiring a transmission actual oil temperature, a clutch temperature and an ambient temperature;

wherein the transmission actual oil temperature can be measured by a transmission oil temperature sensor. Similarly, the clutch temperature can be measured by a clutch temperature sensor. The ambient temperature can be measured by an ambient temperature sensor. The transmission oil temperature sensor, the clutch temperature sensor and the ambient temperature sensor may transmit measured values thereof to a corresponding controller in real time via a Controller Area Network (CAN) bus, a Local Interconnect Network (LIN) bus or a hard wire, etc., respectively.

S2: calculating a transmission equivalent oil temperature according to the acquired transmission actual oil temperature, clutch temperature and ambient temperature.

The clutch temperature and the ambient temperature may have large effects on the transmission oil temperature. For example, the higher the clutch temperature, the higher the transmission oil temperature. The higher the ambient temperature, the higher the transmission oil temperature. On the basis of the transmission actual oil temperature, the transmission equivalent oil temperature is obtained by taking the clutch temperature and the ambient temperature into consideration. It will be appreciated that the trend of change in transmission oil temperature can be predicted more accurately on the basis of the transmission equivalent oil temperature. The flow of the coolant for transmission oil is controlled according to the transmission equivalent oil temperature, such that the transmission oil temperature can be precisely controlled, thereby ensuring the transfer efficiency of the transmission.

For example, a first compensation temperature is determined according to the clutch temperature, and a second compensation temperature is determined according to the ambient temperature. The transmission equivalent temperature is a sum of the transmission actual oil temperature, the first compensation temperature and the second compensation temperature. The first compensation temperature is used to characterize the effect of the clutch temperature on the transmission oil temperature. The second compensation temperature is used to characterize the effect of the ambient temperature on the transmission oil temperature. The relationship between the clutch temperature and the first compensation temperature can be obtained through calibration according to design experience, and the relationship between the ambient temperature and the second compensation temperature can also be obtained through calibration according to design experience.

Table 1

| $T_c$ | 0 | 50 | 100 | 150 | 200 | 250 | 300 | 350 |
|---|---|---|---|---|---|---|---|---|
| $T_c'$ | -6 | -3 | 0 | 3 | 5 | 8 | 10 | 12 |

Table 1 is a table of relationship between the first compensation temperature $T_c'$ and the clutch temperature $T_c$. For example, when the transmission operates normally, the clutch temperature $T_c$ is about 100°C. Therefore, in Table 1, when the corresponding clutch temperature $T_c$ is 100°C, the first compensation temperature $T_c'$ is set to 0°C. After the clutch temperature exceeds 100°C, the continuous increase of the clutch temperature $T_c$ leads to increase of the transmission oil temperature, thus in order to characterize the effect of the clutch temperature $T_c$ on the transmission oil temperature, the first compensation temperature $T_c'$ is a positive value and increases continuously. After the clutch temperature $T_c$ is lower than 100°C, the continuous decrease of the clutch temperature $T_c$ leads to decrease of the transmission oil temperature, thus in order to characterize the effect of the clutch temperature $T_c$ on the transmission oil temperature, the first compensation temperature $T_c'$ is a negative value and decreases continuously. In the present embodiment, the first compensation temperature $T_c'$ is directly proportional to the clutch temperature $T_c$. In other embodiments, the first compensation temperature $T_c'$ may also be positively correlated with the clutch temperature $T_c$.

Table 2

| $T_a$ | -30 | -20 | -10 | 0 | 10 | 20 | 30 | 40 |
|---|---|---|---|---|---|---|---|---|
| $T_a'$ | -10 | -8 | -5 | -2 | 0 | 3 | 5 | 8 |

Table 2 is a table of relationship between the second compensation temperature Ta' and the ambient temperature Ta. For example, when the ambient temperature is about 10°C, it is ensured that the transmission operates normally. Therefore, in table 2, when the corresponding ambient temperature Ta is 10°C, the second compensation temperature Ta' is set to 0°C. After the ambient temperature Ta exceeds 10°C, the continuous increase of the ambient temperature Ta leads to increase of the transmission oil temperature, thus in order to characterize the effect of the ambient temperature Ta on the transmission oil temperature, the second compensation temperature Ta' is a positive value and increases continuously. After the ambient temperature Ta is lower than 10°C, the continuous decrease of the ambient temperature Ta leads to decrease of the transmission oil temperature, thus in order to characterize the effect of the ambient temperature Ta on the transmission oil temperature, the second compensation temperature Ta' is a negative value and decreases continuously. In the present embodiment, the second compensation temperature Ta' is directly proportional to the ambient temperature Ta. In other embodiments, the second compensation temperature Ta' may also be positively correlated with the ambient temperature Ta.

The transmission equivalent oil temperature T is a sum of the transmission actual oil temperature $T_0$, the first compensation temperature $T_c'$ and the second compensation temperature $T_a'$.

S3: determining whether the transmission equivalent oil temperature is greater than a preset oil temperature.

The preset oil temperature may be calibrated by an engine designer according to experience. When the preset oil temperature is exceeded, the transmission cannot operate normally, or the transmission cannot operate for a long time. Exemplarily, the preset oil temperature is 110°C to 150°C.

If the calculated transmission equivalent oil temperature does not exceed the preset oil temperature, the entire system can operate according to the transmission cooling control policies in the related art, which will not be described in detail.

If the calculated transmission equivalent oil temperature exceeds the preset oil temperature, the transmission oil needs to be cooled in greater effort, so as to prevent the transmission oil temperature from continuing to rise or from being relatively high for a long time.

S4: respectively determining, on the basis of a determination result that the transmission equivalent oil temperature is greater than the preset oil temperature, a target temperature of an engine coolant and a target flow rate of a coolant flowing through the transmission oil cooler according to the transmission equivalent oil temperature.

The engine coolant is the coolant flowing through the engine. The engine coolant can flow into the transmission oil cooler by means of the flow direction control assembly. Thus, the temperature of the engine coolant has a direct effect on the cooling of the transmission oil. Likewise, the flow rate of the coolant flowing through the transmission oil cooler also has a direct effect on the cooling of the transmission oil. Therefore, in the present embodiment, by controlling the temperature of the engine coolant and controlling the flow rate of the coolant flowing through the transmission oil cooler, precise adjustment of the temperature of the transmission oil is ensured, thereby achieving precise control of the transmission cooling.

The step of determining the target temperature $T_{target}$ of the engine coolant according to the transmission equivalent oil temperature T comprises:

determining a target cooling coefficient $\alpha$ of the engine coolant according to the transmission equivalent oil temperature T. The relationship between the transmission equivalent oil temperature and the target cooling coefficient $\alpha$ can be calibrated according to design experience.

Table 3

| T | 100 | 105 | 110 | 115 | 120 | 125 | 130 |
|---|-----|-----|-----|-----|-----|-----|-----|
| $\alpha$ | 0 | 10% | 20% | 40% | 80% | 90% | 100% |

Table 3 is a table of relationship between the target cooling coefficient $\alpha$ and the transmission equivalent oil temperature T. For example, when the transmission operates normally, the transmission oil temperature is about 80°C to 100°C. Therefore, in Table 3, when the corresponding transmission equivalent oil temperature T is 100°C, the target cooling coefficient $\alpha$ is set to 0. When the transmission equivalent oil temperature T exceeds 100°C, it means that the transmission oil needs to be cooled additionally; furthermore, the continuous increase of the transmission equivalent oil temperature T means that the efficiency of cooling the transmission oil needs to be improved continuously. The target cooling coefficient $\alpha$ serves to characterize the extent to which the temperature of the engine coolant decreases further on the basis of the current temperature. The lower the temperature of the engine coolant, the lower the temperature of the coolant flowing to the transmission oil cooler, and the higher the efficiency of cooling the transmission oil. Thus, as the transmission equivalent oil temperature T increases continuously, the target cooling coefficient $\alpha$ increases continuously.

For example, the target temperature $T_{target}$ of the engine coolant is determined according to the target cooling coefficient $\alpha$, a current optimal temperature $T_{optimal}$ of the engine coolant and a current lowest temperature $T_{lowest}$ of the engine coolant, wherein

$$\alpha = \frac{T_{optimal} - T_{target}}{T_{optimal} - T_{lowest}}.$$

The current optimal temperature $T_{optimal}$ of the engine coolant and the current lowest temperature $T_{lowest}$ of the engine coolant are determined according to the current operating condition of the engine, and this is a related art. The relationship of the current optimal temperature $T_{optimal}$ and the current lowest temperature $T_{lowest}$ of the engine coolant as a function of the engine operating condition is prestored in the engine controller. When the temperature of the engine coolant is between the current optimal temperature $T_{optimal}$ and the current lowest temperature $T_{lowest}$, it can be ensured that the engine operates normally according to the current operating condition.

It should be noted that, in order to ensure factors such as engine efficiency, oil consumption and emission, the engine controller may control the engine to operate at an optimal power, such that the current actual temperature of the engine coolant is equal to or approximately equal to the current optimal temperature $T_{optimal}$. Therefore, in view of the above explanation of the meaning characterized by the target cooling coefficient $\alpha$, the present disclosure specifically proposes the above calculation formula: $\alpha = \frac{T_{optimal} - T_{target}}{T_{optimal} - T_{lowest}}$.

In view of Table 3 and the calculation formula, it can be determined that the continuous increase of the transmission equivalent oil temperature T means that the efficiency of cooling the transmission oil needs to be improved continuously; correspondingly, the target cooling coefficient $\alpha$ increases continuously, and the target temperature $T_{target}$

of the engine coolant decreases continuously, such that the temperature of the coolant flowing to the transmission oil cooler decreases, and thus the efficiency of cooling the transmission oil is higher.

In the present embodiment, the target cooling coefficient $\alpha$ is directly proportional to the transmission equivalent oil temperature T. In other embodiments, the target cooling coefficient $\alpha$ may also be positively correlated with the transmission equivalent oil temperature T.

For example, the relationship between the transmission equivalent oil temperature and the target flow rate of the coolant flowing through the transmission oil cooler can be calibrated.

For example, the relationship between a flow rate increment coefficient $\mu$ of the coolant flowing through the transmission oil cooler and the transmission equivalent oil temperature T is first calibrated in the present embodiment. A target flow rate L of the coolant flowing through the transmission oil cooler is determined according to the flow rate increment coefficient $\mu$. The relational expression between the flow rate increment coefficient $\mu$ and the target flow rate L is: $L = (1 + \mu)L'$, where L' is the current flow rate of the coolant flowing through the transmission oil cooler. The flow rate increment coefficient $\mu$ serves to characterize the extent to which the flow rate of the coolant flowing through the transmission oil cooler increases further on the basis of the current flow rate.

Table 4

| T | 100 | 105 | 110 | 115 | 120 | 125 | 130 |
|---|-----|-----|-----|-----|-----|-----|-----|
| $\mu$ | 0 | 10% | 15% | 20% | 30% | 40% | 50% |

Table 4 is a table of relationship between the flow rate increment coefficient $\mu$ and the transmission equivalent oil temperature T. For example, when the transmission operates normally, the transmission oil temperature is about 100°C. Therefore, in Table 4, when the corresponding transmission equivalent oil temperature T is 100°C, the flow rate increment coefficient $\mu$ is set to 0. The continuous increase of the transmission equivalent oil temperature T means that the efficiency of cooling the transmission oil needs to be improved continuously; correspondingly, the flow rate increment coefficient $\mu$ increases continuously, such that the target flow rate L of the coolant flowing through the transmission oil cooler increases, and thus the efficiency of cooling the transmission oil increases.

S5: controlling the engine coolant to change from a current temperature to the target temperature, and at the same time controlling the flow rate of the coolant flowing through the transmission oil cooler to change from a current flow rate to the target flow rate.

According to the determined target temperature of the engine coolant, the combustion mechanism, power, etc. of the engine are controlled, and the opening and closing of each opening of the flow direction control assembly and the opening degree, etc. are adjusted, such that the temperature of the coolant flowing through the engine changes from the current temperature to the target temperature, thereby ensuring the cooling effect of the coolant flowing through the transmission oil cooler on the transmission oil. At the same time, the flow rate of the coolant flowing through the transmission oil cooler is controlled so as to change from the current flow rate to the target flow rate. For example, the change of the flow rate of the coolant flowing through the transmission oil cooler to the target flow rate may be controlled by separately adjusting the opening degree of the first flow rate adjustment assembly; or, the opening degree of the first flow rate adjustment assembly, the opening degree of the second flow rate adjustment assembly and the flow rate of the coolant flowing through the heat dissipation assembly are cooperatively controlled at the same time, such that the change of the flow rate of the coolant flowing through the transmission oil cooler to the target flow rate is finally achieved.

In the present embodiment, the flow rate increment coefficient $\mu$ is directly proportional to the transmission equivalent oil temperature T. In other embodiments, the flow rate increment coefficient $\mu$ may also be positively correlated with the transmission equivalent oil temperature T.

The transmission oil temperature is controlled by adjusting two parameters (the temperature of the engine coolant and the flow rate of the coolant flowing through the transmission oil cooler) which have direct effects on the cooling of the transmission oil, thereby achieving precise control of the transmission cooling.

According to the control method for a circulation system of a coolant for transmission oil disclosed in the present embodiment, on the basis of the transmission actual oil temperature, the transmission equivalent oil temperature is obtained by taking the clutch temperature and the ambient temperature which have close effects on the transmission oil temperature into consideration. The trend of change in transmission oil temperature can be predicted more accurately on the basis of the transmission equivalent oil temperature. Two parameters (the temperature of the engine coolant and the flow rate of the coolant flowing through the transmission oil cooler) which have direct effects on the cooling of the transmission oil are respectively determined according to the transmission equivalent oil temperature, such that the transmission oil temperature is precisely adjusted, thereby achieving precise control of the transmission cooling.

The present embodiment provides a circulation system of a coolant for transmission oil, comprising an engine cooling circuit, a heating assembly, a transmission oil cooler and a heat dissipation assembly, the heating assembly, the transmission oil cooler and the heat dissipation assembly being able to be respectively coupled to the engine cooling circuit.

For example, the engine cooling circuit comprises a first electric water pump and an engine which are connected in series, and an engine oil cooler. The engine cooling circuit is respectively connected to the heating assembly, the transmission oil cooler and the heat dissipation assembly by means of a flow direction control assembly. Exemplarily, the flow direction control assembly is a reversing valve, and can respectively control connection and disconnection between the engine cooling circuit and the heating assembly, the transmission oil cooler and the heat dissipation assembly. The transmission oil cooler, the heating assembly and the heat dissipation assembly can be respectively connected in parallel with the engine oil cooler.

The circulation system of a coolant for transmission oil further comprises:

an acquisition module configured to acquire a transmission actual oil temperature, a clutch temperature and an ambient temperature;

a first calculation module configured to calculate a transmission equivalent oil temperature according to the acquired transmission actual oil temperature, clutch temperature and ambient temperature;

a determination module configured to determine whether the transmission equivalent oil temperature is greater than a preset oil temperature;

a second calculation module configured to determine, when the transmission equivalent oil temperature is greater than the preset oil temperature, a target temperature of an engine coolant and a target flow rate of a coolant flowing through the transmission oil cooler according to the transmission equivalent oil temperature;

a temperature control module configured to control the engine coolant to change from a current temperature to the target temperature; and

a flow rate control module configured to control the flow rate of the coolant flowing through the transmission oil cooler to change from a current flow rate to the target flow rate while the temperature control module controls the engine coolant to change from the current temperature to the target temperature.

For example, the first calculation module comprises a first calculation unit, a second calculation unit and a third calculation unit.

The first calculation unit is configured to determine a first compensation temperature according to the clutch temperature, wherein the relationship between the clutch temperature and the first compensation temperature can be calibrated.

For example, for the relationship between the first compensation temperature $T_c$' and the clutch temperature $T_c$, reference can be made to Table 1 in the above embodiment.

When the transmission operates normally, the clutch temperature $T_c$ is about 100°C. When the corresponding clutch temperature Tc is 100°C, the first compensation temperature $T_c$' is set to 0°C. After the clutch temperature exceeds 100°C, the continuous increase of the clutch temperature $T_c$ leads to increase of the transmission oil temperature, thus in order to characterize the effect of the clutch temperature $T_c$ on the transmission oil temperature, the first compensation temperature $T_c$' is a positive value and increases continuously. After the clutch temperature $T_c$ is lower than 100°C, the continuous decrease of the clutch temperature $T_c$ leads to decrease of the transmission oil temperature, thus in order to characterize the effect of the clutch temperature $T_c$ on the transmission oil temperature, the first compensation temperature $T_c$' is a negative value and decreases continuously. The first compensation temperature $T_c$' is directly proportional to or positively correlated with the clutch temperature $T_c$.

The second calculation unit is configured to determine a second compensation temperature according to the ambient temperature, wherein the relationship between the ambient temperature and the second compensation temperature can be calibrated.

For example, for the relationship between the second compensation temperature $T_a$' and the ambient temperature $T_a$, reference can be made to Table 2 in the above embodiment.

When the ambient temperature is about 10°C, it is ensured that the transmission operates normally. When the corresponding ambient temperature $T_a$ is 10°C, the second compensation temperature $T_a$' is set to 0°C. After the ambient temperature $T_a$ exceeds 10°C, the continuous increase of the ambient temperature $T_a$ leads to increase of the transmission oil temperature, thus in order to characterize the effect of the ambient temperature $T_a$ on the transmission oil temperature, the second compensation temperature $T_a$' is a positive value and increases continuously. After the ambient temperature $T_a$ is lower than 10°C, the continuous decrease of the ambient temperature $T_a$ leads to decrease of the transmission oil temperature, thus in order to characterize the effect of the ambient temperature $T_a$ on the transmission oil temperature, the second compensation temperature $T_a'$ is a negative value and decreases continuously. The second compensation temperature $T_a'$ is directly proportional to or positively correlated with the ambient temperature $T_a$.

The third calculation unit is configured to calculate the transmission equivalent oil temperature, the transmission equivalent oil temperature being a sum of the transmission actual oil temperature, the first compensation temperature and the second compensation temperature.

For example, the second calculation module comprises a fourth calculation unit, a fifth calculation unit and a sixth calculation unit.

The fourth calculation unit is configured to determine a target cooling coefficient $\alpha$ of the engine coolant according to the transmission equivalent oil temperature, wherein the relationship between the transmission equivalent oil temperature and the target cooling coefficient $\alpha$ can be calibrated.

For example, for the relationship between the target cooling coefficient $\alpha$ and the transmission equivalent oil temperature T, reference can be made to Table 3 in the above embodiment.

When the transmission operates normally, the transmission oil temperature is generally about 100°C. When the corresponding transmission equivalent oil temperature T is 100°C, the target cooling coefficient $\alpha$ is set to 0. The continuous increase of the transmission equivalent oil temperature T means that the efficiency of cooling the transmission oil needs to be improved continuously. The target cooling coefficient $\alpha$ serves to characterize the extent to which the temperature of the engine coolant decreases further on the basis of the current temperature. The lower the temperature of the engine coolant, the lower the temperature of the coolant flowing to the transmission oil cooler, and the higher the efficiency of cooling the transmission oil. As the transmission equivalent oil temperature T increases continuously, the target cooling coefficient $\alpha$ increases continuously.

The fifth calculation unit is configured to determine the target temperature $T_{target}$ of the engine coolant according to the target cooling coefficient $\alpha$, a current optimal temperature $T_{optimal}$ and a current lowest temperature $T_{lowest}$ of the

$$\alpha = \frac{T_{optimal} - T_{target}}{T_{optimal} - T_{lowest}}$$

engine coolant, wherein .

The current optimal temperature $T_{optimal}$ and the current lowest temperature $T_{lowest}$ of the engine coolant are determined according to the current operating condition of the engine, and this is a related art. The relationship of the current optimal temperature $T_{optimal}$ and the current lowest temperature $T_{lowest}$ of the engine coolant as a function of the engine operating condition is prestored in the engine controller. When the temperature of the engine coolant is between the current optimal temperature $T_{optimal}$ and the current lowest temperature $T_{lowest}$, it can be ensured that the engine operates normally according to the current operating condition.

It should be noted that, in order to ensure factors such as engine efficiency, oil consumption and emission, the engine controller may control the engine to operate at an optimal power, such that the current actual temperature of the engine coolant is equal to or approximately equal to the current optimal temperature $T_{optimal}$. Therefore, in view of the above explanation of the characterized meaning of the target cooling coefficient $\alpha$, the present disclosure specifically

$$\alpha = \frac{T_{optimal} - T_{target}}{T_{optimal} - T_{lowest}}$$

proposes the above calculation formula: .

The continuous increase of the transmission equivalent oil temperature T means that the efficiency of cooling the transmission oil needs to be improved continuously; correspondingly, the target cooling coefficient $\alpha$ increases continuously, and the target temperature $T_{target}$ of the engine coolant decreases continuously, such that the temperature of the coolant flowing to the transmission oil cooler decreases, and thus the efficiency of cooling the transmission oil is higher.

The sixth calculation unit is configured to determine the target flow rate of the coolant flowing through the transmission oil cooler according to the transmission equivalent oil temperature, wherein the relationship between the transmission equivalent oil temperature and the target flow rate of the coolant flowing through the transmission oil cooler can be calibrated.

For the relationship between the flow rate increment coefficient $\mu$ and the transmission equivalent oil temperature T, reference can be made to Table 4 in the above embodiment. When the transmission operates normally, the transmission oil temperature is generally about 100°C. When the corresponding transmission equivalent oil temperature T is 100°C, the flow rate increment coefficient $\mu$ is set to 0. The continuous increase of the transmission equivalent oil temperature T means that the efficiency of cooling the transmission oil needs to be improved continuously; correspondingly, the flow rate increment coefficient $\mu$ increases continuously, such that the target flow rate L of the coolant flowing through the transmission oil cooler increases, and thus the efficiency of cooling the transmission oil increases.

The circulation system of a coolant for transmission oil provided by the present embodiment can execute the control method for a circulation system of a coolant for transmission oil provided by any embodiment of the present disclosure, and has corresponding functional modules for executing the method and beneficial effects.

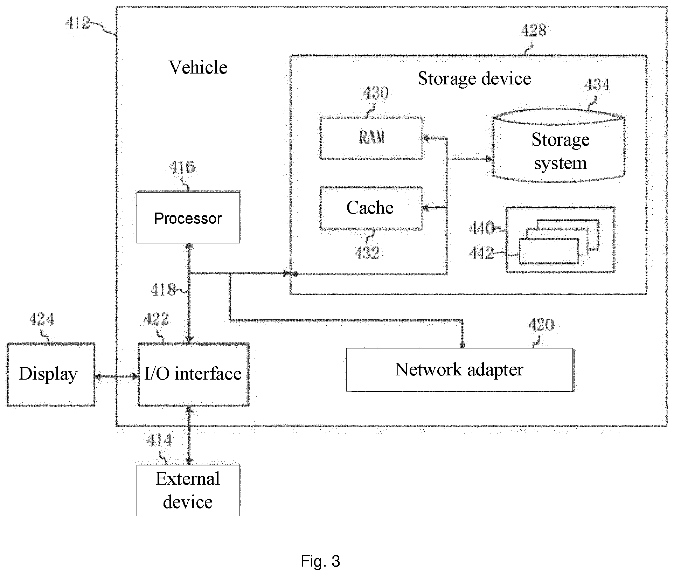

Fig. 3 is a schematic structural diagram of a vehicle in the present embodiment. Fig. 3 shows a block diagram of an exemplary vehicle 412 suitable for implementing the embodiments of the present disclosure. The vehicle 412 shown in Fig. 3 is only an example and should not bring any limitation to the functions and scope of use of the embodiments of the present disclosure.

As shown in Fig. 3, the vehicle 412 is shown in the form of a general-purpose terminal. Components of the vehicle 412 may include, but are not limited to, a vehicle body (not shown), one or more processors 416, a storage device 428, and a bus 418 that connects different system components (including the storage device 428 and the processors 416).

Bus 418 represents one or more of several types of bus structures, including a storage device bus or storage device controller, a peripheral bus, an accelerated graphics port, a processor, or a local bus using any of a variety of bus structures. By way of example, such architectures include, but are not limited to, an Industry Subversive Alliance (ISA) bus, a Micro Channel Architecture (MAC) bus, an enhanced ISA bus, a Video Electronics Standards Association (VESA) local bus, and a Peripheral Component Interconnect (PCI) bus.

The vehicle 412 typically comprises a variety of computer system readable media. These media may be any available medium that can be accessed by the vehicle 412, including volatile and non-volatile media, and removable and non-removable media.

The storage device 428 may comprise a computer system readable medium in the form of a volatile memory, such as a Random Access Memory (RAM) 430 and/or a cache memory 432. The vehicle 412 may comprise other removable/non-removable, and volatile/non-volatile computer system storage media. By way of example only, a storage system 434 may be configured to read from and write to a non-removable and non-volatile magnetic medium (not shown in Fig. 3, commonly referred to as a "hard drive"). Although not shown in Fig. 3, a magnetic disk drive for reading from or writing to a removable non-volatile magnetic disk (e.g., a "floppy disk"), and an optical disk drive for reading from or writing to a removable non-volatile optical disk such as a Compact Disc Read-Only Memory (CD-ROM), a Digital Video Disc-Read Only Memory (DVD-ROM), or other optical media may be provided. In these cases, each drive may be connected to the bus 418 via one or more data medium interfaces. The storage device 428 may comprise at least one program product having a set of (e.g., at least one) program modules that are configured to perform the functions of the embodiments of the present disclosure.

A program/utility 440, having a set of (at least one) program modules 442 may be stored in, for example, the storage device 428, such program modules 442 include, but are not limited to, an operating system, one or more application programs, other program modules and program data, and the implementation of a network environment may be included in each of or some combinations of these examples. The program modules 442 generally perform the functions and/or methods in the embodiments described herein.

The vehicle 412 may also communicate with one or more external devices 414 (e.g., a keyboard, a pointing terminal, a display 424, etc.), may also communicate with one or more terminals that enable a user to interact with the vehicle 412, and/or communicate with any terminal (e.g., a network card, a modem, etc.) that enables the vehicle 412 to communicate with one or more other computing terminals. Such communication may be performed via an input/output (I/O) interface 422. Also, the vehicle 412 may communicate with one or more networks (e.g., a Local Area Network (LAN), a Wide Area Network (WAN), and/or a public network, such as the Internet) via a network adapter 420. As shown in Fig. 3, the network adapter 420 communicates with other modules of the vehicle 412 via the bus 418. It should be appreciated that although not shown in the drawings, other hardware and/or software modules may be used in combination with the vehicle 412, including, but not limited to: a microcode, a terminal drive, a redundant processor, an external magnetic disk drive array, a Redundant Arrays of Independent Disks (RAID) system, a tape drive, and a data backup storage system, etc.

The processor 416 runs a program stored in the storage device 428 to execute various functional applications and data processing, for example, to implement the control method for a circulation system of a coolant for transmission oil provided in the embodiments of the present disclosure. The method comprises:

S1: acquiring a transmission actual oil temperature, a clutch temperature and an ambient temperature;

S2: calculating a transmission equivalent oil temperature according to the acquired transmission actual oil temperature, clutch temperature and ambient temperature;

S3: determining whether the transmission equivalent oil temperature is greater than a preset oil temperature, and if so, skipping to S4;

S4: respectively determining a target temperature of an engine coolant and a target flow rate of a coolant flowing through the transmission oil cooler according to the transmission equivalent oil temperature; and

S5: controlling the engine coolant to change from a current temperature to the target temperature, and at the same time controlling the flow rate of the coolant flowing through the transmission oil cooler to change from a current flow rate to the target flow rate.

The present embodiment provides a computer readable storage medium, storing a computer program which, when executed by a processor, implements the control method for a circulation system of a coolant for transmission oil provided in the embodiments of the present disclosure. The method comprises:

S1: acquiring a transmission actual oil temperature, a clutch temperature and an ambient temperature;

S2: calculating a transmission equivalent oil temperature according to the acquired transmission actual oil temperature, clutch temperature and ambient temperature;

S3: determining whether the transmission equivalent oil temperature is greater than a preset oil temperature, and if so, skipping to S4;

S4: respectively determining a target temperature of an engine coolant and a target flow rate of a coolant flowing through the transmission oil cooler according to the transmission equivalent oil temperature; and

S5: controlling the engine coolant to change from a current temperature to the target temperature, and at the same time controlling the flow rate of the coolant flowing through the transmission oil cooler to change from a current flow rate to the target flow rate.

The computer storage medium in the embodiments of the present disclosure may be any combination of one or more computer readable media. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any combination of the foregoing. More specific examples (a non-exhaustive list) of the computer readable storage medium include: electrical connection having one or more wires, a portable computer magnetic disk, a hard disk, a Random Access Memory (RAM), a Read-Only Memory (ROM), an Erasable Programmable Read-Only Memory (EPROM or flash memory), an optical fiber, a portable Compact Disc Read-Only Memory (CD-ROM), an optical storage device, a magnetic storage device, or any suitable combination of the foregoing. In the context of this document, a computer readable storage medium may be any tangible medium that contains or stores a program for use by or in connection with an instruction execution system, apparatus or device. The computer readable storage medium may be a non-transitory computer readable storage medium.

The computer readable signal medium may include a propagated data signal, with computer readable program code carried therein, in a baseband or as part of a carrier wave. Such propagated data signal may take any of a variety of forms, including, but not limited to, electromagnetic signals, optical signals, or any suitable combination of the foregoing. The computer readable signal medium may also be any computer readable medium except computer readable storage medium, and the computer readable medium can send, propagate or transmit a program for use by or in connection with an instruction execution system, apparatus or device.

The program code stored on the computer readable medium may be transmitted using any appropriate medium, including but not limited to wireless, electric wire, optical cable, RF, etc., or any suitable combination of the foregoing.

The computer program code for executing operations of the present disclosure may be written in one or more programming languages or combinations thereof, including object oriented programming languages such as Java, Smalltalk and C++, and conventional procedural programming languages, such as "C" programming language or similar programming languages. The program code may be executed entirely on the user's computer, partly on the user's computer, as a stand-alone software package, partly on the user's computer and partly on the remote computer, or entirely on the remote computer or terminal. In the cases where the remote computer is involved, the remote computer may be connected to the user's computer via any type of network, including a Local Area Network (LAN) or a Wide Area Network (WAN), or may be connected to an external computer (for example, via the Internet by an Internet service provider).

According to the circulation system of a coolant for transmission oil, the control method, the vehicle and the storage medium provided in the present disclosure, on the basis of the transmission actual oil temperature, the transmission equivalent oil temperature is obtained by taking the clutch temperature and the ambient temperature which have close effects on the transmission oil temperature into consideration. The trend of change in transmission oil temperature can be predicted more accurately on the basis of the transmission equivalent oil temperature. Two parameters, i.e. the temperature of the engine coolant and the flow rate of the coolant flowing through the transmission oil cooler, which have direct effects on the cooling of the transmission oil are respectively determined according to the transmission equivalent oil temperature, such that the the transmission oil temperature is precisely adjusted, thereby achieving precise control of the transmission cooling.

**Claims**

1. A control method for a circulation system of a coolant for transmission oil, the circulation system of a coolant for transmission oil comprising an engine cooling circuit, a transmission oil cooler and a heat dissipation assembly, the transmission oil cooler and the heat dissipation assembly being able to be respectively coupled to the engine cooling circuit, wherein the method comprises:

   acquiring a transmission actual oil temperature, a clutch temperature and an ambient temperature;
   calculating a transmission equivalent oil temperature according to the transmission actual oil temperature, the clutch temperature and the ambient temperature;
   determining whether the transmission equivalent oil temperature is greater than a preset oil temperature;
   respectively determining, on the basis of a determination result that the transmission equivalent oil temperature is greater than the preset oil temperature, a target temperature of an engine coolant and a target flow rate of a coolant flowing through the transmission oil cooler according to the transmission equivalent oil temperature; and
   controlling the engine coolant to change from a current temperature to the target temperature, and at the same time controlling the flow rate of the coolant flowing through the transmission oil cooler to change from a current flow rate to the target flow rate.

2. The method according to claim 1, wherein calculating the transmission equivalent oil temperature according to the transmission actual oil temperature, the clutch temperature and the ambient temperature comprises:

   determining a first compensation temperature according to the clutch temperature, and determining a second compensation temperature according to the ambient temperature, wherein the relationship between the clutch temperature and the first compensation temperature can be calibrated, and the relationship between the ambient temperature and the second compensation temperature can be calibrated; and
   taking a sum of the transmission actual oil temperature, the first compensation temperature and the second compensation temperature as the transmission equivalent oil temperature.

3. The method according to claim 1, wherein determining the target temperature of the engine coolant according to the transmission equivalent oil temperature comprises:

   determining a target cooling coefficient $\alpha$ of the engine coolant according to the transmission equivalent oil temperature, wherein the relationship between the transmission equivalent oil temperature and the target cooling coefficient $\alpha$ can be calibrated; and
   determining the target temperature $T_{target}$ of the engine coolant according to the target cooling coefficient $\alpha$, a current optimal temperature $T_{optimal}$ of the engine coolant and a current lowest temperature $T_{lowest}$ of the engine coolant, wherein $\alpha = \dfrac{T_{optimal} - T_{target}}{T_{optimal} - T_{lowest}}$.

4. The method according to claim 1, wherein the relationship between the transmission equivalent oil temperature and the target flow rate of the coolant flowing through the transmission oil cooler can be calibrated.

5. A circulation system of a coolant for transmission oil, comprising an engine cooling circuit, a transmission oil cooler and a heat dissipation assembly, the transmission oil cooler and the heat dissipation assembly being able to be respectively coupled to the engine cooling circuit, wherein the system further comprises:

   an acquisition module configured to acquire a transmission actual oil temperature, a clutch temperature and an ambient temperature;
   a first calculation module configured to calculate a transmission equivalent oil temperature according to the transmission actual oil temperature, the clutch temperature and the ambient temperature;
   a determination module configured to determine whether the transmission equivalent oil temperature is greater than a preset oil temperature;

a second calculation module configured to determine, on the basis of a determination result that the transmission equivalent oil temperature is greater than the preset oil temperature, a target temperature of an engine coolant and a target flow rate of a coolant flowing through the transmission oil cooler according to the transmission equivalent oil temperature;

a temperature control module configured to control the engine coolant to change from a current temperature to the target temperature; and

a flow rate control module configured to control the flow rate of the coolant flowing through the transmission oil cooler to change from a current flow rate to the target flow rate while the temperature control module controls the engine coolant to change from the current temperature to the target temperature.

6. The system according to claim 5, wherein the first calculation module comprises:

a first calculation unit configured to determine a first compensation temperature according to the clutch temperature, wherein the relationship between the clutch temperature and the first compensation temperature can be calibrated;

a second calculation unit configured to determine a second compensation temperature according to the ambient temperature, wherein the relationship between the ambient temperature and the second compensation temperature can be calibrated; and

a third calculation unit configured to take a sum of the transmission actual oil temperature, the first compensation temperature and the second compensation temperature as the transmission equivalent oil temperature.

7. The system according to claim 5, wherein the second calculation module comprises:

a fourth calculation unit configured to determine a target cooling coefficient $\alpha$ of the engine coolant according to the transmission equivalent oil temperature, wherein the relationship between the transmission equivalent oil temperature and the target cooling coefficient $\alpha$ can be calibrated; and

a fifth calculation unit configured to determine the target temperature $T_{target}$ of the engine coolant according to the target cooling coefficient $\alpha$, a current optimal temperature $T_{optimal}$ and a current lowest temperature $T_{lowest}$ of the engine coolant, wherein $\alpha = \dfrac{T_{optimal} - T_{target}}{T_{optimal} - T_{lowest}}$.

8. The system according to claim 5, wherein the second calculation module comprises:
a sixth calculation unit configured to determine the target flow rate of the coolant flowing through the transmission oil cooler according to the transmission equivalent oil temperature, wherein the relationship between the transmission equivalent oil temperature and the target flow rate of the coolant flowing through the transmission oil cooler can be calibrated.

9. A vehicle, comprising:

at least one processor; and
a storage device configured to store at least one program;
wherein when the at least one program is executed by the one or more processors, the at least one processor is caused to implement the control method for a circulation system of a coolant for transmission oil according to any one of claims 1 to 4.

10. A computer readable storage medium, storing a computer program which, when executed by a processor, implements the control method for a circulation system of a coolant for transmission oil according to any one of claims 1 to 4.

Fig.1

Acquire a transmission actual oil temperature, a clutch temperature and an ambient temperature

Calculate a transmission equivalent oil temperature according to the acquired transmission actual oil temperature, clutch temperature and ambient temperature — S2

The transmission equivalent oil temperature is greater than a preset oil temperature — S3

是

Respectively determine a target temperature of an engine coolant and a target flow rate of a coolant flowing through the transmission oil cooler according to the transmission equivalent oil temperature — S4

Control the engine coolant to change from a current temperature to the target temperature, and at the same time control the flow rate of the coolant flowing through the transmission oil cooler to change from a current flow rate to the target flow rate — S5

Fig. 2

Fig. 3

## INTERNATIONAL SEARCH REPORT

| International application No. |
| --- |
| **PCT/CN2022/106223** |

**A. CLASSIFICATION OF SUBJECT MATTER**

F16H 59/72(2006.01)i; F16H 57/04(2010.01)i

According to International Patent Classification (IPC) or to both national classification and IPC

**B. FIELDS SEARCHED**

Minimum documentation searched (classification system followed by classification symbols)

F16H59, F16H57

Documentation searched other than minimum documentation to the extent that such documents are included in the fields searched

Electronic data base consulted during the international search (name of data base and, where practicable, search terms used)

CNTXT, VEN, CJFD, CNKI: 变速器, 离合器, 环境温度, 工作温度, 冷却, 油冷, 冷却系数, transmission, clutch, enviroment, temperature, cool+, coefficient

**C. DOCUMENTS CONSIDERED TO BE RELEVANT**

| Category* | Citation of document, with indication, where appropriate, of the relevant passages | Relevant to claim No. |
| --- | --- | --- |
| PX | CN 113446390 A (CHINA FIRST AUTOMOBILE WORKS GROUP CO., LTD.) 28 September 2021 (2021-09-28)<br>claims 1-10 | 1-10 |
| Y | CN 109488754 A (GREAT WALL MOTOR CO., LTD.) 19 March 2019 (2019-03-19)<br>description, paragraphs 0033-0061, and figures 1-3 | 1-2, 4-6, 8-10 |
| Y | CN 103362628 A (FORD GLOBAL TECHNOLOGIES, LLC) 23 October 2013 (2013-10-23)<br>description, paragraph 0067 | 1-2, 4-6, 8-10 |
| A | CN 206988414 U (XUZHOU XCMG MINING MACHINERY CO., LTD.) 09 February 2018 (2018-02-09)<br>entire document | 1-10 |
| A | CN 109958608 A (GREAT WALL MOTOR CO., LTD.) 02 July 2019 (2019-07-02)<br>entire document | 1-10 |
| A | CN 205036848 U (DONGFENG FUJI THOMSON THERMOSTAT CO., LTD.) 17 February 2016 (2016-02-17)<br>entire document | 1-10 |

☑ Further documents are listed in the continuation of Box C. ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **01 September 2022** | **23 September 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/106223** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 109058441 A (CHONGQING CHANG'AN AUTOMOBILE CO., LTD.) 21 December 2018 (2018-12-21) <br> entire document | 1-10 |
| A | CN 206429294 U (ANHUI JIANGHUAI AUTOMOBILE GROUP CO., LTD.) 22 August 2017 (2017-08-22) <br> entire document | 1-10 |
| A | KR 20090062268 A (HYUNDAI MOTOR CO., LTD. et al.) 17 June 2009 (2009-06-17) <br> entire document | 1-10 |
| A | JP 2006105093 A (AISAN INDUSTRY CO., LTD. et al.) 20 April 2006 (2006-04-20) <br> entire document | 1-10 |

Form PCT/ISA/210 (second sheet) (January 2015)

## INTERNATIONAL SEARCH REPORT
### Information on patent family members

International application No.

**PCT/CN2022/106223**

| Patent document cited in search report | | | Publication date (day/month/year) | Patent family member(s) | | | Publication date (day/month/year) |
|---|---|---|---|---|---|---|---|
| CN | 113446390 | A | 28 September 2021 | None | | | |
| CN | 109488754 | A | 19 March 2019 | None | | | |
| CN | 103362628 | A | 23 October 2013 | US | 2013255603 | A1 | 03 October 2013 |
| | | | | US | 2014142819 | A1 | 22 May 2014 |
| | | | | RU | 2013114269 | A | 10 October 2014 |
| | | | | DE | 102013205009 | A1 | 02 October 2013 |
| CN | 206988414 | U | 09 February 2018 | None | | | |
| CN | 109958608 | A | 02 July 2019 | None | | | |
| CN | 205036848 | U | 17 February 2016 | None | | | |
| CN | 109058441 | A | 21 December 2018 | None | | | |
| CN | 206429294 | U | 22 August 2017 | None | | | |
| KR | 20090062268 | A | 17 June 2009 | None | | | |
| JP | 2006105093 | A | 20 April 2006 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110829603